# EUROPEAN PATENT SPECIFICATION

(11) **EP 3 814 746 B1**
(45) Date of publication and mention of the grant of the patent: **27.12.2023**
(21) Application number: 19799315.7
(22) Date of filing: 10.05.2019
(51) Int. Cl.: G01N 15/06, G05D 23/13, G05D 23/19, B01D 49/02, G01N 1/22, G01N 15/00, F01N 11/00

(54) **METHOD AND APPARATUS FOR MEASURING PARTICLES**
VERFAHREN UND VORRICHTUNG ZUR MESSUNG VON PARTIKELN
PROCÉDÉ ET APPAREIL DE MESURE DE PARTICULES

(30) Priority: 11.05.2018 FI 20185432
(43) Date of publication of application: 05.05.2021
(73) Proprietor: Pegasor Oy, 33100 Tampere (FI)
(72) Inventor: JANKA, Kauko, 33100 Tampere (FI); SAUKKO, Erkka, 33100 Tampere (FI)
(74) Representative: Kolster Oy Ab
(86) International application number: PCT/FI2019/050372
(87) International publication number: WO 2019/215395

(56) References cited:
- EP-A1- 3 124 951
- WO-A1-2017/077190
- WO-A1-2017/077190
- FR-B1- 2 771 174
- US-A1- 2006 156 791
- US-A1- 2008 041 138
- US-A1- 2012 262 182
- US-B2- 9 683 962

## Description

### FIELD OF THE INVENTION

The invention relates to a method of measuring particles and to an apparatus for measuring particles.

### BACKGROUND OF THE INVENTION

When measuring exhaust gases of a combustion engine, for example, the temperature of the gas flow is so high that it sets strict requirements for the structure of the measuring apparatus. It is challenging to provide the apparatus with adequate insulators and seals. In addition, the high temperature causes challenges regarding the measuring electronics.

One solution is to carry out the measurement in a lower temperature. The lower temperature, however, causes particle conversion through particle nucleation and condensation of volatile species in the exhaust. Particle conversion must be prevented using sample handling techniques. The sample handling techniques, however, are cumbersome and rather expensive solutions. Document WO 2017/077190 A1 discloses an apparatus and a process for measuring characteristics of a particle flow. Document US 2006/156791 A1 discloses a method and a sensor device for measuring particle emissions from exhaust gases of a combustion engine.

### BRIEF DESCRIPTION OF THE INVENTION

An object of the invention is to provide a new method and a new apparatus for measuring particles. The invention is characterized by what is stated in the independent claims. Embodiments of the invention are disclosed in the dependent claims.

In the presented solution, particles are measured in a sample gas flow. Particles in the sample gas flow are charged and excess ions and/or a part of the charged particles are removed from the sample gas flow. The charging of the particles and the removing of the excess ions and/or the part of the charged particles are performed in a first temperature of the sample gas flow. The temperature of the sample gas flow is lowered to a second temperature and thereafter the charge carried by the particles is measured in the second temperature of the sample gas flow. It is rather simple and easy to provide the means for charging and the means for removing excess ions and/or a part of the charged particles that tolerate the rather high first temperature. When the charging and removing are performed in the rather high first temperature the need for using sample handling techniques for preventing particle conversion may be avoided. When the particles are charged and the excess ions and/or the part of the charged particles are removed the charge carried by the particles stays with the sample gas flow even though the temperature of the sample gas flow is lowered. Because the charge carried by the particles is measured in the second lower temperature there are no strict requirements for the measuring components, such as insulators, cabling, and electronics but the structure of the measuring means may be rather simple and thus economical.

According to an embodiment, the first temperature is higher than 250°C. In such a high temperature it is possible to achieve very reliable measuring results.

According to an embodiment, the second temperature is lower than 100°C. In such a low temperature the structure of the measuring means is easily implemented.

According to an embodiment, the lowering of the temperature of the sample gas flow is performed by guiding the sample gas flow through a channel whereby the wall of the channel has a temperature that is lower than the first temperature. Such a cooling structure is simple and reliable.

According to an embodiment, the lowering of the temperature is performed by using a cooling gas flow having a temperature that is lower than the first temperature.

According to an embodiment, the cooling gas is used as a shielding gas for insulators in the measurement apparatus. This embodiment decreases thermophoretic losses.

According to an embodiment, the cooling gas flow is mixed with the sample gas flow thereby diluting the sample gas flow. By mixing the cooling gas with the sample gas flow the size of the cooling means may be formed to be rather small.

### BRIEF DESCRIPTION OF THE DRAWINGS

In the following the invention will be described in greater detail by means of embodiments with reference to the attached drawings, in which
Figure 1 is a schematic cross-sectional side view of an apparatus for measuring particles; and
Figure 2 is a schematic cross-sectional side view of another apparatus for measuring particles.

### DETAILED DESCRIPTION OF THE INVENTION

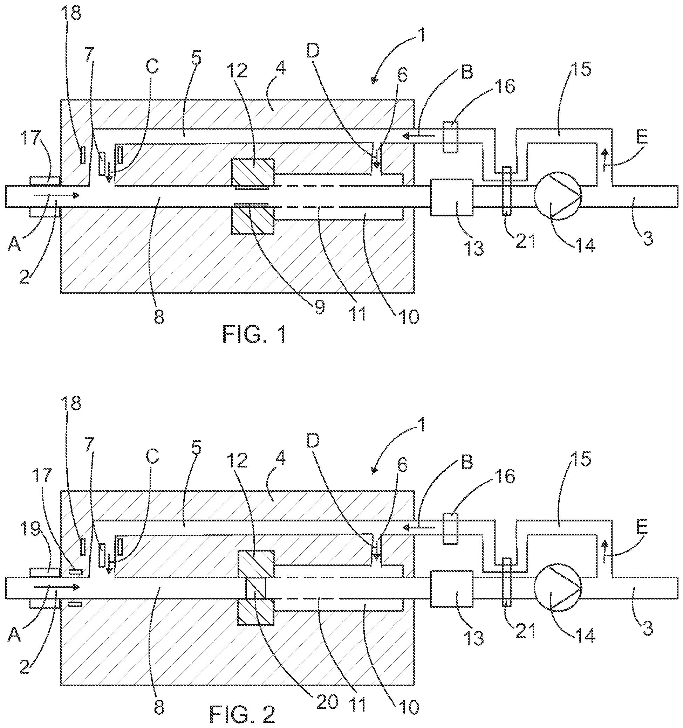

Figure 1 shows an apparatus 1 for measuring particles in a sample gas flow A. The sample gas flow A flows into the apparatus 1 through a sample gas flow inlet 2 at a first end of the apparatus 1. At the second end of the apparatus 1 there is a sample gas flow outlet 3 wherefrom the sample gas flow A flows out of the apparatus 1.

The apparatus 1 may be positioned at an end of an exhaust pipe of a combustion engine of a vehicle, for example. In such case, the sample gas flow inlet 2 may be connected to the end of the exhaust pipe. Thus, the whole or at least the majority of an exhaust gas flow in the exhaust pipe forms the sample gas flow A. Correspondingly, in such case the sample gas flow outlet 3 may lead the sample gas flow A to ambient air, for example.

The apparatus 1 may also be situated by a side of an exhaust pipe of a combustion engine of a vehicle, for example. In such case a part of the exhaust gas flow in the exhaust gas pipe is lead to the apparatus thereby forming the sample gas flow A. Thus, the sample gas inlet 2 may be connected to an opening in the side of the exhaust gas pipe, for example. Correspondingly, the sample gas flow outlet 3 may connected to another opening in the side of the exhaust pipe, for example. In such case, the sample gas flow A is thus returned back to the exhaust gas pipe.

The apparatus 1 may be applied also to other embodiments. Examples of such embodiments are static power plant emission measurements, marine power plant emission measurements, furnace measurements and high temperature gas phase chemical reactor monitoring.

The apparatus 1 comprises a frame 4 through which a sample gas channel 8 is provided. The sample gas flow A flows through the frame 4 along the sample gas channel 8.

A clean gas flow B is provided to flow along a clean gas channel 5 in the frame 4. The clean gas forming the clean gas flow B may be clean air, for example.

A charger 7 is provided in the clean gas channel 5. The charger 7 may be a corona discharge needle, for example. The charger 7 ionizes the clean gas flowing in the clean gas channel 5 thereby forming an ionized clean gas flow C.

The ionized clean gas flow C may form a main flow of an ejector thereby forming an ejector flow. The ejector flow may generate an under pressure for driving the sample gas flow A into the apparatus 1 via the sample gas flow inlet 2. Another solution, however, is to provide the system with one inlet flow and one outlet flow and form the flow with a pump. In such case, the operation of the ejector would be redundant and would not affect the flow.

The ionized clean gas flow C and the sample gas flow A are mixed in the sample gas channel 8. Thereby the ions in the ionized clean gas flow charge particles in the sample gas flow A.

Instead of mixing an ionized gas flow with the sample gas flow particles in the sample gas flow may be charged by other means, also. Examples of these other means are photoionization, radioactive ionization and x-ray ionization.

The apparatus further comprises means for removing excess ions and/or a part of the charged particles from the sample gas flow A. In the embodiment disclosed in Figure 1 the means is a voltage trap 9. The voltage trap 9 removes small charged particles due to their high electrical mobility in an electrical field. Thus, the voltage trap 9 may remove free ions from the sample gas flow A. The voltage trap 9 may also remove charged particles having a particle diameter smaller than a trap cut-off diameter. The size of the trap cut-off diameter may be controlled by adjusting the voltage of the voltage trap 9, for example. It is also possible to control the size of the trap cut-off diameter by adjusting the distance between trapping electrodes in the voltage trap 9, for example.

The apparatus 1 also comprises means for cooling the sample gas flow A. The means is positioned after an insulator 12 in the direction of the sample gas flow A. The voltage trap 9 may be annular. The insulator 12 insulates the voltage trap 9 from the frame 4. Thus, the insulator 12 may be a structural component and an electric insulator.

In the embodiment disclosed in Figure 1 the means for cooling comprises a cooling sleeve 10. A cooling gas flow D is arranged to flow along a cooling gas channel 6 in to the cooling sleeve 10. The cooling sleeve 10 is positioned around the sample gas channel 8.

The cooling gas flow D may consist of a clean gas such as clean air. The wall of the sample gas channel 8 may comprise apertures 11. In such case the cooling gas flow D is mixed with the sample gas flow A thereby diluting and cooling the sample gas flow A. The cooling gas flow D may also be guided to a shielding gas for shielding the insulator 12.

The cooling gas flow D also cools the wall of the sample gas channel 8. If there are no apertures 11 in the wall of the sample gas channel 8 the cooling gas may be another cooling gas than clean gas. Thus, in such case the cooling gas may be ambient air, for example. In such case also, the apparatus 1 should be provided with a channel leading out of the cooling sleeve 10 to ambient atmosphere, for example.

Instead of a cooling gas, another cooling fluid may also be used. Thus, the cooling fluid may also be cooling liquid such as water or oil, for example.

After the temperature of the sample gas flow A is lowered the charge carried by the particles is measured by a measuring device 13. The measuring device 13 may comprise a particle filter collecting at least a fraction of the charged particles, for example. Another embodiment is to use inductive measurement principle whereby by modulating the ionizing element or the trapping element variation of charged particle concentration is achieved and an inductive detection element detects the change in charge between the electrodes as current.

For ensuring a sufficient flow through the apparatus 1 a pump 14 may be provided in the apparatus 1. However, a pump is not necessary but a sufficient flow may be arranged using an ejector pump, for example. In such case the clean air to the charger should be pumped by using an external pump, for example.

A recirculation flow E may be formed to flow along a recirculation channel 15. Providing the system with the pump 14 and the recirculation channel 15 provides for the feature that the system keeps the hot inlet flow equal to the cool outlet flow. This is beneficial because there is no need to control the inner flows accurately and the sample flow easily remains constant.

The apparatus may be provided with a counter flow heat exchanger 21. The heat exchanger 21 may adjust the temperature of the recirculation flow E. The heat exchanger may be used for removing moisture or water from the sample gas flow A. A water separator may also be used for removing moisture or water. For controlling the moisture, it is also possible to insulate the system such that the temperature of the sample gas flow A remains on a level high enough. The temperature of the sample gas flow A may be arranged to remain above 60 °C, for example.

The apparatus may also be provided with a passive water absorber. The passive water absorber may comprise water absorbing or water adsorbing material provided in a capsule structure. One example of such material is silica gel.

Preferably the passive water absorber is positioned to such part of the apparatus where the temperature of the gas flow is rather low. Thus, according to an embodiment the passive water absorber is positioned after the measuring device 13. In such case the passive water absorber is closer to the gas flow outlet 3 than the gas flow inlet 2. According to an embodiment the passive water absorber is positioned in the sample gas channel 8 after the measuring device 13. According to an embodiment the passive water absorber is positioned in the recirculation channel 15 whereby it does not have substantial harmful effects on the gas flow in the sample gas channel 8. According to an embodiment the passive water absorber is positioned at the front part of the recirculation channel 15 near the gas flow outlet 3.

During cold start cycle, for example, the temperature of the gas exhaust pipe may be rather low. This could cause condensation and build-up of water to the exhaust system. When the exhaust system temperature rises, the excess water is evaporated into the exhaust, causing higher dewpoint than expected by the combustion process alone. The passive water absorber absorbs or adsorbs the excess water or moisture and thereby decreases or removes the need to raise the temperature of the gas flow in the device. The capacity of the passive water absorber is high enough to remove the excess water or moisture formed during the cold start cycle. After the cold start cycle the dew point of the gas flow is reduced whereby the material of the passive water absorber releases the water from it to the gas flow. Thereby the passive water absorber recovers and is ready to absorb water or moisture during the next cold start cycle, for example.

A filter 16 is used for cleaning the recirculation flow E. Thereby a clean gas flow B is formed.

The temperature of the sample gas flow A is first adjusted and balanced or stabilized to a rather high first temperature. In this connection, the first temperature means that the temperature is higher than a certain temperature. According to an embodiment, the first temperature is higher than 200 °C. According to another embodiment, the first temperature is higher than 250 °C.

The means for stabilizing the temperature of the sample gas flow A to the first temperature may comprise sample gas flow heater 17 and a clean gas flow heater 18, for example. The heaters 17 and 18 may be electric heaters comprising heating resistors, for example. The sample gas flow heater 17 may be positioned around the pipe that lead the sample gas flow A from the exhaust pipe to the apparatus, for example. The clean gas flow heater 18 may be positioned inside the frame 4 of the apparatus, for example.

The means for cooling the sample gas flow A lower the temperature of the sample gas flow A to a second temperature. In this connection, the second temperature means that the temperature is lower than the first temperature. According to an embodiment, the second temperature is at least 50 °C lower than the first temperature. According to another embodiment, the second temperature is lower than 100 °C. If the temperature of the sample gas flow A always remains above the condensation point of the sample gas there is no need for separate means for removing moisture or water. In such case the structure of the system is simple. Typically, the condensation point of an exhaust gas in an engine using liquid fuel is lower than 60 °C. Thus, according to an embodiment at least the second temperature is more than 60 °C and preferably the temperature of the sample gas flow throughout the apparatus is maintained above 60 °C.

In the embodiment disclosed in Figure 2 the sample gas flow heater 17 is positioned inside the frame 4 of the apparatus 1. Furthermore, the sample gas flow inlet 2 and/or the pipe leading the sample gas flow A to the apparatus is provided with a thermal insulator 19.

In addition, the means for removing excess ions and/or a part of the charged particles from the sample gas flow A is a diffusion trap or a diffusion collector 20. Other examples of the means for removing excess ions and/or a part of the charged particles from the sample gas flow are a cyclone and an impactor.

It will be obvious to a person skilled in the art that, as technology advances, the inventive concept can be implemented in various ways. The invention and its embodiments are not limited to the examples described above but may vary within the scope of the claims.

## Claims

1. A method of measuring particles in a sample gas flow (A), the method comprising
charging particles in the sample gas flow (A), and
removing excess ions and/or a part of the charged particles from the sample gas flow (A),
wherein the charging and the removing of the excess ions and/or the part of the charged particles are performed in a first temperature of the sample gas flow (A),
**characterized in that** the method further comprises lowering the temperature of the sample gas flow (A) to a second temperature of the sample gas flow (A) and thereafter measuring the charge carried by the particles in the second temperature of the sample gas flow (A).

2. A method as claimed in claim 1, wherein the first temperature is higher than 250°C.

3. A method as claimed in claim 1 or 2, wherein the second temperature is lower than 100°C.

4. A method as claimed in any one of the preceding claims, wherein the lowering of the temperature of the sample gas flow (A) is performed by guiding the sample gas flow (A) through a channel (8) whereby the wall of the channel (8) has a temperature that is lower than the first temperature.

5. A method as claimed in any one of the preceding claims, wherein the lowering of the temperature is performed by using a cooling gas flow (D) having a temperature that is lower than the first temperature.

6. A method as claimed in claim 5, wherein the cooling gas is used as a shielding gas for insulators (12) in the measurement apparatus (1).

7. A method as claimed in claim 5 or 6, wherein the cooling gas flow (D) is mixed with the sample gas flow (A) thereby diluting the sample gas flow (A).

8. A method as claimed in any one of the preceding claims, wherein the flow of the sample gas is formed by a pump (14) and a part of the sample gas flow (A) is recirculated by forming a recirculation flow (E).

9. An apparatus for measuring particles in a sample gas flow (A), the apparatus (1) comprising:
means for charging particles in the sample gas flow (A),
means for removing excess ions and/or a part of the charged particles from the sample gas flow (A), and
a measuring device (13) for measuring the charge carried by the particles in the sample gas flow (A), means for stabilizing the temperature of the sample gas flow (A) at the means for charging particles and means for removing excess ions and/or a part of the charged particles from the sample gas flow (A) to a first temperature, and
**characterized by** the apparatus further comprising cooling means for lowering the temperature of the sample gas flow (A) at the measuring device (13) to a second temperature.

10. An apparatus as claimed in claim 9, wherein the apparatus (1) comprises a sample gas channel (8) for leading the sample gas flow (A) and the cooling means comprise means for cooling a wall of the sample gas channel (8).

11. An apparatus as claimed in claim 9 or 10, wherein the cooling means comprise means for leading a cooling gas flow (D).

12. An apparatus as claimed in claim 11, wherein the cooling means comprise means for mixing the cooling gas flow with the sample gas flow.

13. An apparatus as claimed in any one of the claims 9 to 12, wherein the apparatus (1) comprises a pump (14) for forming the flow of the sample gas and a recirculation channel (15) for recirculating a part of the sample gas flow (A).

## Patentansprüche

1. Verfahren zur Messung von Partikeln in einer Probengasströmung (A), wobei das Verfahren Folgendes umfasst
Laden von Partikeln in der Probengasströmung (A), und
Beseitigen überzähliger Ionen und/oder eines Teils der geladenen Partikel von der Probengasströmung (A),
wobei das Laden und das Beseitigen der überzähligen Ionen und/oder des Teils der geladenen Partikel bei einer ersten Temperatur der Probengasströmung (A) durchgeführt werden,
**dadurch gekennzeichnet, dass** das Verfahren ferner das Senken der Temperatur der Probengasströmung (A) auf eine zweite Temperatur der Probengasströmung (A) umfasst und
danach Messen der durch die Partikel bei der zweiten Temperatur der Probengasströmung (A) getragenen Ladung.

2. Verfahren nach Anspruch 1, wobei die erste Temperatur höher als 250°C ist.

3. Verfahren nach Anspruch 1 oder 2, wobei die zweite Temperatur niedriger als 100°C ist.

4. Verfahren nach einem der vorhergehenden Ansprüche, wobei das Senken der Temperatur der Probengasströmung (A) durch Lenken der Probengasströmung (A) durch einen Kanal (8) durchgeführt wird, wodurch die Wand des Kanals (8) eine Temperatur aufweist, die niedriger als die erste Temperatur ist.

5. Verfahren nach einem der vorhergehenden Ansprüche, wobei das Senken der Temperatur unter Verwendung einer Kühlgasströmung (D) durchgeführt wird, die eine Temperatur aufweist, die niedriger als die erste Temperatur ist.

6. Verfahren nach Anspruch 5, wobei das Kühlgas als ein Schutzgas für Isolatoren (12) in der Messvorrichtung (1) verwendet wird.

7. Verfahren nach Anspruch 5 oder 6, wobei die Kühlgasströmung (D) mit der Probengasströmung (A) gemischt wird, wodurch die Probengasströmung (A) verdünnt wird.

8. Verfahren nach einem der vorhergehenden Ansprüche, wobei die Strömung des Probengases durch eine Pumpe (14) gebildet wird und ein Teil der Probengasströmung (A) durch Bilden einer Rückführungsströmung (E) rückgeführt wird.

9. Vorrichtung zum Messen von Partikeln in einer Probengasströmung (A), wobei die Vorrichtung (1) Folgendes umfasst:
Mittel zum Laden von Partikeln in der Probengasströmung (A),
Mittel zum Beseitigen überzähliger Ionen und/oder eines Teils der geladenen Partikel von der Probengasströmung (A), und
eine Messvorrichtung (13) zum Messen der durch die Partikel in der Probengasströmung (A) getragenen Ladung,
Mittel zum Stabilisieren der Temperatur der Probengasströmung (A) an den Mitteln zum Laden von Partikeln und Mitteln zum Beseitigen überzähliger Ionen und/oder eines Teils der geladenen Partikel von der Probengasströmung (A) auf einer ersten Temperatur, und
**dadurch gekennzeichnet, dass** die Vorrichtung ferner Kühlmittel zum Senken der Temperatur der Probengasströmung (A) an der Messvorrichtung (13) auf eine zweite Temperatur umfasst.

10. Vorrichtung nach Anspruch 9, wobei die Vorrichtung (1) einen Probengaskanal (8) zum Führen der Probengasströmung (A) umfasst und die Kühlmittel Mittel zum Kühlen einer Wand des Probengaskanals (8) umfassen.

11. Vorrichtung nach Anspruch 9 oder 10, wobei die Kühlmittel Mittel zum Führen einer Kühlgasströmung (D) umfassen.

12. Vorrichtung nach Anspruch 11, wobei die Kühlmittel Mittel zum Mischen der Kühlgasströmung mit der Probengasströmung umfassen.

13. Vorrichtung nach einem der Ansprüche 9 bis 12, wobei die Vorrichtung (1) eine Pumpe (14) zum Bilden der Strömung des Probengases und einen Rückführungskanal (15) zum Rückführen eines Teils der Probengasströmung (A) umfasst.

## Revendications

1. Procédé pour mesurer des particules dans un échantillon de flux de gaz (A), le procédé comprenant les étapes consistant à :
charger des particules dans l'échantillon de flux de gaz (A), et
retirer les ions en excès et/ou une partie des particules chargées de l'échantillon de flux de gaz (A),
dans lequel les étapes de chargement et de retrait des ions en excès et/ou de la partie de particules chargées sont réalisées à une première température de l'échantillon de flux de gaz (A),
**caractérisé en ce que** le procédé comprend en outre les étapes consistant à :
abaisser la température de l'échantillon de flux de gaz (A) à une seconde température de l'échantillon de flux de gaz (A), et
mesurer ensuite la charge portée par les particules à la seconde température de l'échantillon de flux de gaz (A).

2. Procédé selon la revendication 1, dans lequel la première température est supérieure à 250°C.

3. Procédé selon la revendication 1 ou 2, dans lequel la seconde température est inférieure à 100°C.

4. Procédé selon l'une quelconque des revendications précédentes, dans lequel l'étape consistant à abaisser la température de l'échantillon de flux de gaz (A) est réalisée en guidant l'échantillon de flux de gaz (A) dans un canal (8), moyennant quoi la paroi du canal (8) a une température qui est inférieure à la première température.

5. Procédé selon l'une quelconque des revendications précédentes, dans lequel l'étape consistant à abaisser la température est réalisée en utilisant un flux de gaz de refroidissement (D) ayant une température qui est inférieure à la première température.

6. Procédé selon la revendication 5, dans lequel le gaz de refroidissement est utilisé en tant que gaz de protection pour les isolants (12) dans l'appareil de mesure (1).

7. Procédé selon la revendication 5 ou 6, dans lequel le flux de gaz de refroidissement (D) est mélangé avec l'échantillon de flux de gaz (A), diluant ainsi l'échantillon de flux de gaz (A).

8. Procédé selon l'une quelconque des revendications précédentes, dans lequel le flux de l'échantillon de gaz est formé par une pompe (14) et une partie de l'échantillon de flux de gaz (A) est recirculée en formant un flux de recirculation (E) .

9. Appareil pour mesurer des particules dans un échantillon de flux de gaz (A), l'appareil (1) comprenant :
des moyens pour charger des particules dans l'échantillon de flux de gaz (A),
des moyens pour retirer les ions en excès et/ou une partie des particules chargées de l'échantillon de flux de gaz (A), et
un dispositif de mesure (13) pour mesurer la charge portée par les particules dans l'échantillon de flux de gaz (A),
des moyens pour stabiliser la température de l'échantillon de flux de gaz (A) au niveau des moyens pour charger les particules et au niveau des moyens pour retirer les ions en excès et/ou une partie des particules chargées de l'échantillon de flux de gaz (A), à une première température, et
**caractérisé par** l'appareil qui comprend en outre :
des moyens de refroidissement pour abaisser la température de l'échantillon de flux de gaz (A) au niveau du dispositif de mesure (13), à une seconde température.

10. Appareil selon la revendication 9, dans lequel l'appareil (1) comprend un canal d'échantillon de gaz (8) pour diriger l'échantillon de flux de gaz (A) et les moyens de refroidissement comprennent des moyens pour refroidir une paroi du canal d'échantillon de gaz (8).

11. Appareil selon la revendication 9 ou 10, dans lequel les moyens de refroidissement comprennent des moyens pour diriger un flux de gaz de refroidissement (D).

12. Appareil selon la revendication 11, dans lequel les moyens de refroidissement comprennent des moyens pour mélanger le flux de gaz de refroidissement avec l'échantillon de flux de gaz.

13. Appareil selon l'une quelconque des revendications 9 à 12, dans lequel l'appareil (1) comprend une pompe (14) pour former le flux de l'échantillon de gaz et un canal de recirculation (15) pour faire recirculer une partie de l'échantillon de flux de gaz (A).
